# EUROPEAN PATENT APPLICATION

(11) **EP 4 679 789 A1**
(43) Date of publication of application: **14.01.2026**
(21) Application number: 24187581.4
(22) Date of filing: 10.07.2024
(51) Int. Cl.: H04L 41/0833, H04W 52/02

(54) **ENERGY-EFFICIENT NETWORK, METHOD FOR OPERATING SUCH A NETWORK AND SYSTEM OF SUCH A NETWORK WITH A MOBILE USER EQUIPMENT**

(71) Applicant: Telefónica Germany GmbH & Co. OHG, 80992 München (DE)
(72) Inventor: Müllner, Robert, 81479 München (DE); Amelingmeyer, Matthias, 40699 Erkrath (DE)
(74) Representative: Lorenz Seidler Gossel Part. mbB

(57) **Abstract**

The present invention relates to an energy-efficient network comprising a first network member and a second network member between which a data transmission is established via at least one network component, characterized in that a power consumption controlling unit for adapting the throughput and/or latency of the data transmission by controlling the at least one network component, wherein the power consumption controlling unit is configured to adapt the throughput and/or latency of the data transmission established between the first network member and the second network member on basis of a power consumption policy of the network.

## Description

The present invention relates to the field of telecommunication systems, and more particularly to a method, a network and system to indirectly control the service quality for energy saving purpose.

In a mobile network, most energy is consumed in the Radio Access Network (RAN) part, particularly in the Radio Frequency (RF) boards of the base stations. In the following the term base station is used to represent the equipment that sends data via the air interface to the mobile station and receives data via the air interface from the mobile station. In the following the mobile station is also termed mobile device, mobile user equipment, or User Equipment (UE). A base station consists of several components and the architecture can be split for example into a baseband part and an RF part. In 3rd Generation Partnership Project (3GPP) networks of the fourth generation (4G) the base station is termed evolved NodeB (eNB) and next generation NodeB (gNB) in fifth generation (5G) networks. The present invention is not restricted to 4G and 5G mobile networks but focusses also on sixth generation (6G) networks and upcoming technologies, as well as mobile networks of other standards than 3GPP, transport and fixed networks.

For reducing the power consumption, temporarily not used capacities are deactivated in conventional base stations. In a multi-carrier network, consisting of several frequency bands, a complete carrier can be shut down during low traffic periods. Moreover, also for active carriers, the Power Amplifier (PA) can temporarily be deactivated if there is no data to be scheduled for transmission over the air interface. In today's 4G networks, a shut-down of the PA operates on Transmission Time Interval (TTI) basis of 1 ms. In 5G networks the PA is deactivated on slot and symbol basis. Traffic load thresholds are used to control the balance between energy saving on the one hand and maintaining the quality level of the services on the other hand. The more resources are deactivated, the more power can be saved. This implies a concentration of data transmission (a) in the frequency domain by deactivating a carrier or limiting the bandwidth, or (b) in the time domain by a temporal deactivation of the PA, or on both. In contrast, highest capacity and network quality is achieved if the data to be scheduled are spread over the whole frequency and time domain. Thus, highest bandwidth can be assigned, and interference can be kept low.

These power saving features are effective for low and medium traffic load only. With increasing traffic load, the opportunities for a temporary deactivation of a carrier or for a short-term deactivation of the PA become less frequent.

It is the goal of the present invention to increase the capability of saving energy whenever considered beneficial by the network.

This is obtained by the network comprising the features of claim 1 or the method comprising the method steps of claim 10.

The inventive energy-efficient network comprises a first network member and a second network member between which a data transmission is established via at least one network component and is characterized by a power consumption controlling unit for adapting the throughput and/or latency of the data transmission by controlling the at least one network component, wherein the power consumption controlling unit is configured to adapt the throughput and/or latency of the data transmission established between the first network member and the second network member on basis of a power consumption policy of the network.

It is the underlying idea of the present invention to enable savings in power consumption by means of controlling the underlying network via which a data transmission is performed between a first network member and the second network member.

The first network member and/or the second network member can be a user equipment or a data server of the network. Thus, the data transmission can be established between two user equipments and/or one user equipment and a data server. Between the first network member and the second network member a data transmission is established over which data is transmitted/received. The data transmission can be a data connection. But for a person skilled in the art, it is apparent that a plurality of data transmissions can be established concurrently between the first network member and a second network member. A data transmission can also be considered as a virtual or physical channel between the first network member and a second network member.

In order to reduce the power consumed by the network, the throughput and/or latency of the data transmission (= data connection) between the first network member and the second network member is limited. By this, the network component can for example operate on a smaller bandwidth, insert or extend pauses when transmitting signals and/or use a different transmission technique requiring less energy (but transferring only a small amount of data).

It is the core idea of the present invention that it is the network deciding about restricting the maximum throughput and/or increasing latency in order to obtain an energy efficient operation state. This may cause a deterioration in the quality of the data transferred between the first network member and the second network member as, for example, the resolution of a video stream has to be decreased and/or the latency has to be increased.

However, the present invention introduces a further dimension to control the balance between power saving and quality perception, the so-called "power-consumption-controlled service quality adaptation". In other words, a slight deterioration in quality is accepted as beneficial effect with respect to energy efficiency of the network to be obtained.

According to an optional modification of the present invention, the power consumption policy of the network comprises information about the current electricity price level together with a threshold value for the electricity price and/or the current time and date of the day together with a scheme containing periods of the day in which energy is to be saved, the power consumption controlling unit being further configured to adapt the throughput and/or latency of the data transmission on basis of the current electricity price level with respect to the threshold value for the electricity price and/or the current time and date of the day with respect to said scheme containing periods of the day in which energy is to be saved.

The power consumption policy containing this type of information allows to operate a network with reduced cost, as during peaks in the electricity pricing, a more energy efficient operation of the network can be chosen.

According to a preferable modification of the present invention, the network further comprises a power generation system for generating power to be supplied to the energy-efficient network, preferably to the at least one network component, e.g. a base station, wherein the power consumption policy comprises information about the state of the power generation system, preferably a level of currently produced power of the power generation system together with a threshold value for the level of currently produced power, and the power consumption controlling unit being further configured to adapt the throughput and/or latency of the data transmission on basis of the currently produced power with respect to the threshold value for the currently produced power.

Thus, a limitation or an adaptation of the throughput and/or increase of latency of the data transmission established via the network component is made dependent on the operating state of the power generation system. For example, in case the power generated by the power generation system lies above the threshold value, no restrictions with respect to the throughput and/or latency of the data transmission in the network have to be applied. If this should not be the case, i.e. the amount of generated power lies below the threshold value, the data throughput in the first data transmission is restricted and/or the latency is increased in order to save power by the network.

In a further preferable modification of the present invention, the network further comprises a power generation system for generating power to be supplied to the energy-efficient network, preferably to the at least one network component, e.g. a base station, and a power accumulating device for storing energy generated by the power generation system, particularly a battery pack, wherein the power consumption policy comprises information about the state of the power accumulating device, preferably a current charging status together with a threshold value for the charging status, and the power consumption controlling unit being further configured to adapt the throughput and/or latency of the data transmission on basis of the current charging status with respect to the threshold value for the charging status, wherein the network preferably further comprises a predicting unit for predicting the power generation of the power generation system so that the power consumption control unit being further configured to adapt the throughput and/or latency of the data transmission on basis of the predicted power generation.

In conventional mobile networks, more and more base station sites or other network components are equipped with power generation facilities from renewable sources such as photovoltaic systems or wind wheels that may feed rechargeable battery systems or accumulators to reduce the amount of energy consumed from the public electrical grid and furthermore to feed the electrical grid with energy. In the following the term battery is used, representing rechargeable batteries or accumulators.

Furthermore, the term battery is also used to represent any other system for energy storage. This includes energy conversion systems from electrical energy to mechanical or kinetic energy including rotation energy or potential energy and vice versa, from electrical energy to thermal energy and vice versa, from electrical to bond energy or any other form of chemical energy and vice versa or between electrical energy and any other form of energy storage.

In a general concept for the integration of on-site power generation systems into decisions for power saving actions, the information about the current battery charging status and/or predictions about the power generation during the next hours is evaluated: If the on-site power generation is high, less or no power saving functionalities are typically applied, whereas the thresholds for triggering power saving measures at the base station are modified towards the opposite direction during periods of low on-site power generation or a low charging level of the battery system.

If a power generation system is not deployed at the site, or its degree of operation is limited, e.g., due to a temporary low level of power production, or zero power production during nights without wind, the degrees of freedom are restricted to the options provided by the power saving features.

According to the invention it is further possible that the power consumption controlling unit is configured to limit the throughput and/or control latency of the data transmission between the first network member and the second network member in order to reduce the energy consumption of the network component.

Restricting the throughput and/or increasing latency of data between the first network member and the second network member can be used to reduce the power consumption while maintaining the data transmission. Limiting the throughput and/or increasing latency will of course have a negative effect on the quality of service of the data transmission between the first network member and the second network member, however, this disadvantage is accepted in order to obtain a greater flexibility with respect to the power consumption of the network. Quality of service and power consumption can be traded-off and balanced into the one or other direction.

According to a possible embodiment of the present invention, the power consumption controlling unit is configured to adapt the throughput and/or latency by changing the service characteristics of the data transmission, preferably by changing the quality of service of the data transmission or of at least one channel established via the data transmission.

When setting up a data transmission between a first network member and a second network member, the network can be aware of the required quality of service class for said data transmission or the at least one channel established by the data transmission. Different Quality of Service (QoS) classes, identifiers, and indicators exist for mobile telecommunication networks. For example, different standardized QCI/5QI values that define specific QoS requirements. Here are some examples:
- QCI 1 / 5QI 1: Conversational voice with low latency and high priority.
- QCI 6 / 5QI 6: Video telephony with moderate latency and medium priority.
- QCI 9 / 5QI 9: Standard internet traffic (e.g., web-browsing) with low priorityand medium latency.

Thus, in case it is intended that the network should save energy by reducing the throughput and/or increasing latency of the data transmission having a specific QoS class (e.g., QCI/5QI), the network may simply degrade the current QoS class (e.g., QCI/5QI) for the existing data transmission to a QoS class (e.g., QCI/5QI) allowing e.g., higher latency. This enables the network component, via which the data transmission (now with the degraded QoS class (e.g., QCI/5QI)) is transmitted, to save energy.

According to a further potential implementation of the present invention, the network is a mobile telecommunication system network and the first network member and/or the second network member is a mobile user equipment or data server in the Internet, and preferably wherein the network component is a base station.

A network embodied by a mobile telecommunication system may very well use the advantages offered by the underlying invention. This is because the power consumption of such a mobile telecommunication system is rather high and largely contributes to the overall cost of operating such a telecommunications system. It would therefore be highly appreciated in case the operational costs for said telecommunication systems could be reduced without significantly impairing the use of the offered services. This is the case when inserting the general idea of the present invention in such mobile telecommunication systems, as slight deteriorations with respect to the quality of service in a data transmission are acceptable when the power consumption for operating the telecommunication system can be reduced.

Preferably, in a network embodied by a mobile telecommunication system, the power consumption controlling unit is configured to adapt
a QoS quality indicator or QoS (class) identifier (e.g., QCI/5QI) in a core network,
a QoS quality indicator or QoS (class) identifier (e.g., QCI/5QI) of a specific transmission in a base station,
a scheduling weight in a base station,
a number of allocated resources on RAN (radio access network) side, and/or the underlying network technology used for data transmission e.g., 3G, 4G or 5G.

The present invention further refers to a system comprising a network of any one of the previously discussed implementations and a mobile user equipment adapted to be used in the network, preferably wherein the mobile user equipment is adapted to send a request for limitation of throughput and/or increase of latency in the data transmission to/from the mobile user equipment to the network.

Additionally, the mobile user equipment may react to a limitation of throughput and/or increase of latency in an existing data transmission in the network by adapting the codec used for coding and decoding the transfer data. For example, when streaming from applications like YouTube or Netflix, the codec adaptation process automatically reacts on the limitation of the throughput and/or latency and almost immediately changes the codec to best fit to the available bandwidth and prevailing radio channel conditions.

It is remarkable that by setting restrictions with respect to the network (i.e., restricting the throughput and/or increasing the latency of a data transmission between a first network member and a second network member), a change in the codec of the underlying transmission can be provoked, despite there is no direct option for forcing the underlying data transmission to do so. Thus, the network may initiate a change of the used codec as it is known that this would be the case when the underlying application sending or receiving data transmission is confronted with a reduced bandwidth due to the restriction of the throughput and/or latency.

The present invention further deals with a method for operating an energy-efficient network, preferably the network of any one of the previously discussed implementations, comprising the steps of establishing a data transmission between a first network member and a second network member via at least one network component, adapting the throughput and/or latency of the data transmission by controlling the at least one network component, wherein the throughput and/or latency of the data transmission established between the first network member and the second network member is adapted on basis of a power consumption policy of the network.

Preferably wherein the power consumption policy of the network comprises information about the current electricity price level together with a threshold value for the electricity price and/or the current time and date of the day together with a scheme containing periods of the day in which energy is to be saved, and the throughput and/or latency of the data transmission is adapted on basis of the current electricity price level with respect to the threshold value for the electricity price and/or the current time and date of the day with respect to said scheme containing periods of the day in which energy is to be saved.

According to a beneficial modification of the method, power is supplied to the energy-efficient network by a power generation system, preferably to the at least one network component, wherein the power consumption policy comprises information about the state of the power generation system, preferably a level of currently produced power of the power generation system together with a threshold value for the level of currently produced power, and the throughput and/or latency of the data transmission is adapted on basis of the currently produced power with respect to the threshold value for the currently produced power.

Additionally, according to another beneficial modification of the method, the throughput of the data transmission between the first network member and the second network member is limited and/or the latency is increased in order to reduce the energy consumption of the network component, preferably by changing the service characteristics of the data transmission, e.g. by changing the quality of service of the data transmission.

Further, according to a potential modification of the method, the network is a mobile telecommunication system network and the first network member and/or the second network member is a mobile user equipment or a data server in the network, and preferably wherein the power consumption of the network component is adapted by changing:
a QoS quality indicator or QoS (class) identifier (e.g., QCI/5QI) in a core network,
a QoS quality indicator or QoS (class) identifier (e.g., QCI/5QI) of a specific transmission in a base station,
a scheduling weight in a base station,
a number of allocated resources on RAN (radio access network) side, and/or the underlying network technology used for data transmission e.g., 3G, 4G or 5G.

The present invention also relates to a method for operating a system of a network of any one of the previously discussed implementations and a mobile user equipment logged into the network, preferably wherein adapting the throughput and/or latency of a data transmission between the mobile user equipment and the network causes the mobile user equipment to change its codec used for compression and decompression for data transferred within said data transmission.

As already briefly explained above, in prior art technologies, the service characteristics are not actively changed by the mobile network to reduce the number of occupied resources for energy saving. The codec that defines the resolution of a video in a streaming or conversational service is not actively adapted (with the aim of reducing energy consumed by the network) but indirectly as a consequence of undesired capacity bottlenecks in a congested cell or poor radio channel conditions.

The power saving features regulate the offered capacity of the sector based on the prevailing traffic load and/or evaluation of the performance indicators, typically by a trend analysis. Consequently, either more or less resources can be allocated to the services, which in turn can provoke a change of the codec e.g., if the throughput and/or latency requirements according to the configured thresholds are not fulfilled. This codec adaptation process is used for example in YouTube or Netflix streaming services [1] [2]. The codec adaptation process in prior art technologies is a consequence of the current data throughput and/or latency, but it is not actively controlled and triggered for power saving decisions (unless the present invention does).

Thus, in the prior art there are only limited options for controlling the energy consumption in mobile networks. It also limits the options for saving energy to low or medium traffic load periods, whereas during high-traffic periods almost no savings can be achieved due to the missing additional dimension for intervention.

In prior art, there is no direct control of the mobile services themselves i.e., power saving measures do not actively trigger a change of the codec and do not influence the resource demand. Prior art systems are a self-stabilising system that reactivate a temporarily deactivated carrier once the load on the active carriers exceeds a specific threshold or the evaluation of quality indicators such as Key Performance Indicators (KPIs) triggers the reactivation of the carrier.

Further features, details and advantages of the invention will become apparent from the following description of the figures. It shows:
- Fig. 1:: a diagram illustrating the newly created adjustment possibilities of the present invention,
- Fig. 2:: a diagram showing the components of an embodiment of the present invention,
- Fig. 3:: a diagram showing the power consumption of a base station site depending on traffic load,
- Fig. 4:: a diagram showing the average on-site power generation of a photovoltaic system over the course of a day,
- Fig. 5:: a diagram illustrating the power consumption of a base station site over the course of a day,
- Fig. 6:: a diagram showing the charging level of a battery pack of the power generation system and respecting charging level indicating to activate a power saving mode or not,
- Fig. 7:: a diagram showing a power saving feature by carrier deactivation of a base station, and
- Fig. 8:: a diagram showing a flowchart of the inventive method.

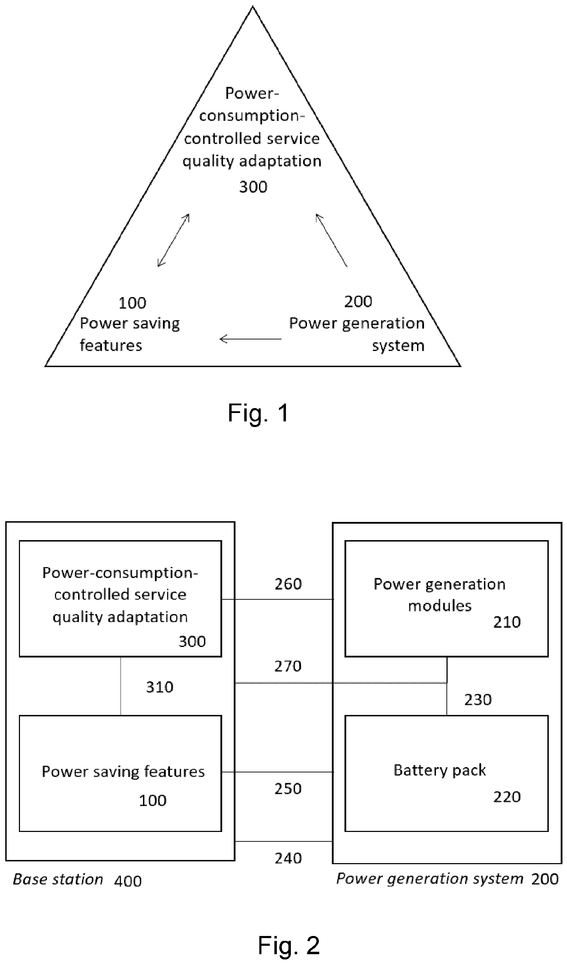

Fig. 1 shows the expansion of the unidirectional interaction between the power generation system 200 and the power saving features 100 to a multi-directional system obtained by the present invention. The control of power saving measures is done between the two components on the bottom of the triangle, the power saving features 100 and the power generation system 200: The outcome of the power generation system 200 defines the level at which the power saving features 100 are operated.

According to the presented invention it is possible to introduce a further dimension, the so-called "power-consumption-controlled service quality adaptation" 300 on top of the triangle in Fig. 1 to further extend the options for controlling the balance between power savings and quality perception of the established data transmission. As already explained above, when it is desired to reduce the power consumption of the network or the network component reliable for establishing the data transmission between the first network member and a second network member, the network is capable to limit the throughput and/or increase the latency of data of the data transmission in order to thereby save energy. Of course, this negatively affects the data transmission with respect to its quality of service, however, this is considered acceptable to a certain amount not significantly impacting the performance as the typical data transmission (e.g., video call or streaming a movie) quickly adapts to the reduced throughput by decreasing the amount of data transferred via the data transmission. This is obtained by reducing, e.g., the color depth or the resolution of the transferred images in a video call or when streaming a movie and may cause a different codec to be used for data to be transferred.

Fig. 2 shows the components of an embodiment of the invention. The new component "Power-consumption-controlled service quality adaptation" 300 can be realised as a stand-alone unit consisting of a processor, memory, power supply, and an input/output unit. In a preferred implementation, this component is integrated into a base station 400 of a mobile telecommunication system and has a logical interface 310 to the power saving features 100 that are operated in the base station and can be orchestrated by external power saving platforms. The base station typically houses further components like the baseband unit and the RF modules, as well as functional units like the Radio Resource Management (RRM), which directly interacts with the power saving features 100.

The optional battery pack 220 can be considered as part of the base station 400 or part of the power generation system 200. In Fig. 2 it is considered as part of the power generation system. The power generation modules 210, e.g., photovoltaic elements, are connected via the interface 230 to the battery pack 220. The power generation system 200 feeds the base station 400 with electrical power via the physical interface 240.

The logical interface 250 between the power generation system 200 and the power saving features 100 is used to control the degree of power saving measures. The presented invention uses a new component "Power-consumption-controlled service quality adaptation" 300 that is connected via the logical interface 310 to the power saving features 100. A further logical interface 260 is presented for the interaction between the power generation system 200 and the "power-consumption-controlled service quality adaptation" component 300.

According to a preferred modification of the present invention, a resource utilisation shall be controlled indirectly depending on the amount of energy that is produced at the site.

The absolute or the relative charging level of the battery pack 220 can be used as criterion for the available amount of produced electrical energy at the site. In addition, the power consumption in the past and - for the future - information from weather forecasts shall be used for calculating predictions of the available electrical energy during the upcoming hours and days. Depending on such a prediction, it may be derived whether it is beneficial to switch into power saving mode and to act await at least one of the power saving features 100 to reduce the power consumption of the base station 400.

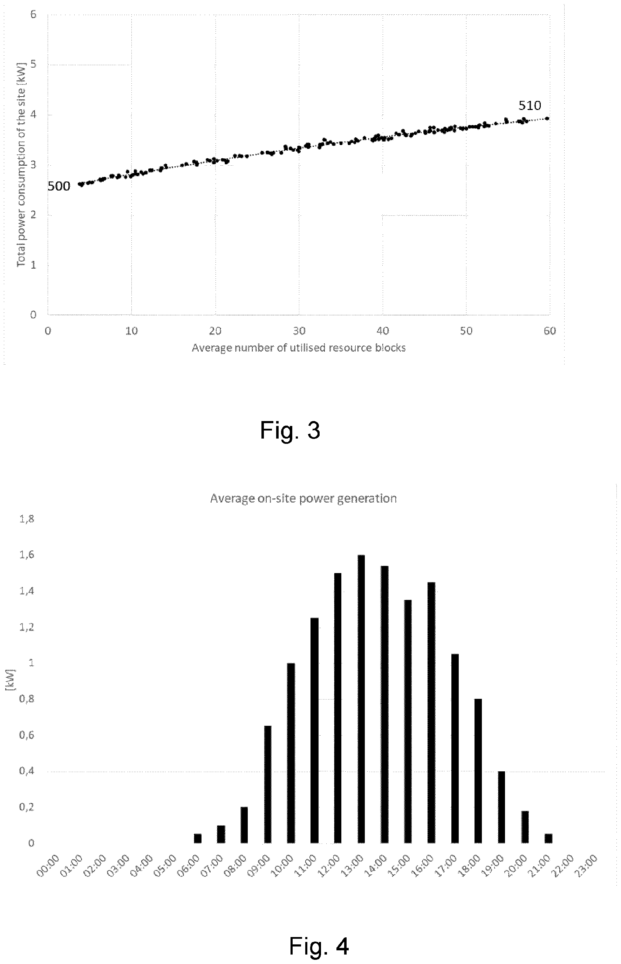

Fig. 3 illustrates the power consumption of a base station site which is typically characterised by a traffic load dependent part and an offset. The offset 500 represents the basic power consumption of the base station and other equipment at zero traffic load. With increasing traffic load of the base station, the power consumption of the base station increases due to higher transmission power, higher processing power for decoding and processing of data etc. The relation 510 between traffic load and power consumption of this load dependent component can be approximated e.g., by a least-square approximation.

If the site is equipped with a power generation system, for example a photovoltaic system, the forecast for the local upcoming hours of sunshine shall be taken into consideration for a prognosis of the charging level of the installed battery system.

Fig. 4 shows an example for the on-site power generation by a small photovoltaic system representing the average generated power throughout the course of one day. If the base station 400 is equipped with a wind wheel to produce electrical energy or any other system for the generation of electrical energy, the forecast of the wind intensity or other related criteria shall be applied to estimate the charging level of the battery pack for the next hours.

In another embodiment of this invention, the power generation modules 210 feed directly the base station 400 with electrical energy via the interface 270 in Fig. 2. In this configuration, a battery pack 220 is not deployed at the base station site. In this embodiment it is not the charging level of the battery which can be used as criterion for executing the procedures presented in this invention, but the energy that is currently produced at the site as described below.

When the base station 400 is equipped with a battery pack 220, the charging level of the battery pack is used for determining whether power saving features 100 of the base station 400 need to be activated or not. A forecast of the charging level of the battery pack for the next hours or days can be calculated by taking into consideration the power consumption during the past for a given traffic load, an adaptation of the power consumption on the current traffic load on basis of the regression curve 510 shown in Fig. 3, and on the expected future traffic load, as well as the amount of produced energy based on information from the weather forecast or trend analysis using extrapolations.

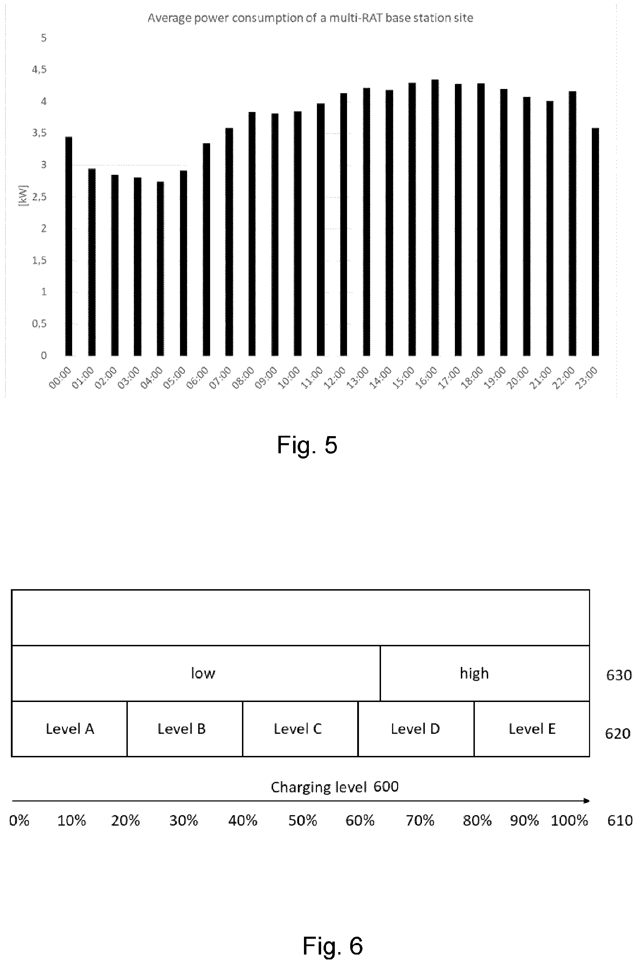

Fig. 5 shows an example for the power consumption of a multi-Radio Access Technology (multi-RAT) base station site over the period of one day. Those base stations are used in 4G and 5G networks and also provide backward compatibility with older technologies like 2G and 3G. A recalculation on the prevailing traffic load can be made based on the characteristic profile of the base station shown in Fig. 3.

According to a preferable modification of the present invention, the charging level of the battery pack 220 can be classified into several ranges. Fig. 6 shows two examples for the classification of the charging level 600 on a linear scale ranging from 0% to 100% (610), five equidistant levels A to E (620), and a two-step classification using ranges of different size (630). For the sake of simplicity, only the states "low" and "high" (630) are henceforth considered.

As is apparent to the skilled person, the battery pack 220 is only one example for energy storage. In a further embodiment of this invention the filling level of a hydrogen tank or any other system of energy storage can be considered.

It is further possible to consider the ageing process of rechargeable batteries when classifying the charging level of the battery pack. Batteries are characterised by an ageing process and typically the battery capacity suffers from this process. Therefore, it is beneficial to consider this effect for the classification of the battery's charging level. A pattern based on one or a combination of the following criteria can be used to adapt/shift the transition border(s) between the charging states, e.g., from "high" to "low" according to the ageing process:
- Lifetime of the battery.
- Counter for the number of executed charging cycles.
- Charging time to reach a certain charging level.
- Measured capacity of the battery.

With this adaptation, during discharging of a battery, the moment of changing the charging level from "high" to "low" is reached earlier for an older battery than for a new battery.

If no battery pack 220 is used or present at the base station 400, the determination on whether power saving features should be used or not can be done according to the level of currently produced power. In one embodiment of the present invention, the scale of produced electrical power is divided into several ranges that represent the different levels. For the sake of simplicity, in an example, only two levels are considered, represented by the states "low" and "high", whereas "low" stands for low amount of energy produced and "high" stands for high amount of energy produced by the power generation system 200. The power saving features are thus only activated in case a low amount of energy is produced by the power generation system.

In a further embodiment of this invention, weather forecast information is taken into consideration and the currently produced power is supplemented by the forecast of the power production in the near future. If for example the state of the currently produced power by a photovoltaic system is "high" but the forecast for the next period of time indicates a decrease of the produced power, the state "low" shall be reported and the actions described in this invention may already be applied. Thus, the information derived from the weather forecast and having a direct impact on the outcome of the power generation system (for example the weather forecast predicts cloudy weather and thus the power generation of a photovoltaic system will be lowered within the next hours) may be used when deciding on whether power saving features are to be activated or not and to which extent to be used.

In another embodiment of the present invention, the amount of consumed energy is used as decision criterion to trigger the power saving features for the network component, for example the base station, as described in this invention. This criterion can be applied also for a network component without a power generation system. A power threshold shall be defined. If the currently consumed power exceeds this threshold, the procedures for power-consumption-controlled service quality adaptation shall be executed meaning that power saving features are activated in order to restrict the power consumption of the network component, e.g. the base station.

In a preferred implementation, filtering of the measured power values shall be applied e.g., by an exponential filter to smoothen the filter output and avoid frequent changes between the states. Another option is the definition of short time intervals and to consider the energy consumption within this time interval as criterion for executing the actions.

In the following the potential procedures to be executed for the power-consumption-controlled service quality adaptation are described in detail. For conversational and streaming services, the perceived video and audio quality is impacted by the codec and thus by the video resolution and the audio bandwidth, respectively. High video resolution, high colour depth and high audio quality typically require a higher amount of data and hence a higher data-rate for transmission. For real-time data transmission these services require more resources than services of lower quality, both for comparable radio channel conditions and data transmission quality in general. Typically, high quality conversational and streaming services require a considerably high number of physical resources.

The idea of this invention is to reduce the resource occupation and thus to provide more idle times when transmitting the data, in which a carrier of a base station or one or multiple antenna paths can be temporarily deactivated, or the power amplifier of the base station can be shut down to save energy.

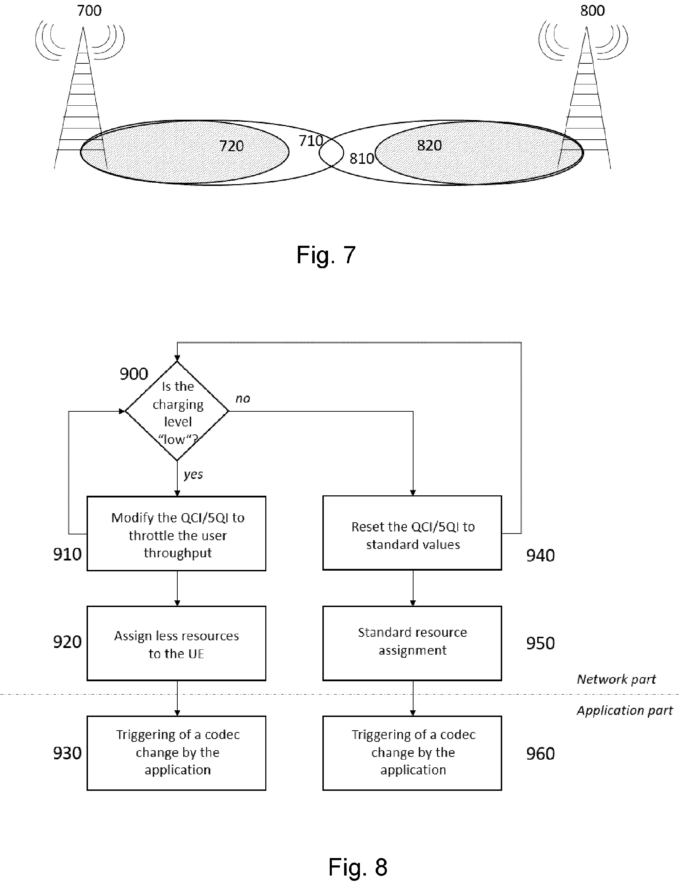

Fig. 7 shows an example of power savings by a load-dependent carrier deactivation of base stations 700 and 800: The base station 700 uses the coverage layer 710 and the capacity layer 720 to cover one sector of the site. The same deployment is shown for base station 800 with the coverage layer 810 and capacity layer 820. According to a potential preferred embodiment of the present invention, if the traffic load in the sector or on the capacity layer falls below a specific threshold, existing connections are preferentially moved to the coverage layer of the same base station and the carrier of the capacity layer is temporarily deactivated to save energy. If the traffic load on the coverage layer exceeds a further threshold, the temporarily deactivated capacity carrier is reactivated again. The procedure described in the presented invention makes use of this prior art technology of carrier deactivation to save energy. The inventive idea of the presented invention lies in the procedure to reduce the traffic load for reaching the carrier deactivation state, or the state of muting of one or multiple antenna paths. It is the network which is actively reducing the throughput of (at least one) data transmission handled by the base station in order to fall below the threshold of occupied physical resources, which allows to deactivate a carrier or one or multiple antenna paths. Thus, the unrestricted regular amount of data transferred by the base station would normally not allow to perform carrier deactivation, however, in order to obtain power savings, the throughput of the data transmission is restricted (causing a drop of the data to be transferred below the threshold allowing carrier deactivation) thereby allowing to perform e.g., carrier deactivation. As a consequence, the network member e.g., a mobile device like a mobile telephone, a smartphone, a laptop or tablet may react to its reduced throughput by decreasing the resolution for a video transmission. The decision on the used resolution is done in the domain of the application which is executed on the network member side and not in the domain of the network itself or the network operator.

There is a plenty of options for performing power saving functions by the energy efficient network. The person skilled in the art is well aware that the network of the present invention may be embodied by a mobile telecommunication network.

In mobile telecommunication networks, QCI (QoS Class Identifier) is a mechanism used to manage and ensure the Quality of Service (QoS) for different types of data traffic. It categorizes traffic into different classes based on their specific QoS requirements, such as latency, packet loss, and priority and has therefor a direct effect on the throughput of data transmitted. Each QCI value corresponds to a set of standardized performance characteristics tailored to various applications and services (e.g., QCI 1-9) or based on operator-defined settings (e.g., QCI 128-254).

Along with the Quality of Service (QoS) Class Identifier (QCI) and 5G QoS Identifier (5QI), different service-related parameters can be defined that are relevant for RRM (radio resource management) decisions, such as the priority level or packet delay budget. On core network side, also a specific maximum throughput can be defined for each QCI/5QI. On radio network side, scheduling weights and further QoS related parameters such as delay, and guaranteed bit rate can be defined.

In a preferred embodiment of the present invention, it is proposed to trigger a change of the QCI/5QI based on power consumption policy, in particular the charging level of the battery system or based on the power production level for those subscribers that are served by the considered base station. For the sake of simplicity, only the term "charging level" is used in the following also representing the power production level for the case that no battery system is used. For this purpose, a message shall be sent from the base station to the core network including the information of the site-specific charging level, in this example "high" or "low".

If it is intended to apply a power saving feature, e.g., the state of charge of the battery pack 220 of the base station is relatively low, a class representing the QCI/5QI for users served by the considered base station shall be changed to a QCI/5QI class for which parameters of lower quality are defined e.g., in the core network. In other words, the quality of service of the data transmission is degraded in order to save energy by the base station.

Along with the definition of different maximum throughput settings for different QCI/5QI classes, the user throughput is limited already on core network side and the amount of data per time unit sent in downlink direction from the base station to the mobile device becomes lower. The data stream is throttled.

For specific streaming applications it is then the application itself that triggers a codec adaptation to lower resolution. If this codec uses a lower bit rate, less resources must be allocated for transmission over the air interface and hence more options are provided to, e.g., deactivate a carrier or power amplifier for saving energy on the base station side.

The important aspect of the present invention is that this procedure allows an intervention on the resources consumed by the application that is triggered by RRM (radio resource management) decisions and thus by the network operator's policy. The application executed on the network member (for example smartphone) reacts on the limited throughput of the data transmission by adapting the codec to a lower resolution suited for these conditions. In this case the target of saving more energy by the network triggers the degrading change of the QCI/5QI class of an existing data connection. The same procedure may also be used for load control to give further users admission to access the site.

Throttling of the throughput forces specific conversational and/or streaming applications to a codec adaptation, which in turn occupies less resources for the transmission over the air interface of a base station. Thus, more idle time slots are available which may allow the deactivation of the power amplifier resulting in a lower energy consumption of the base station.
- If the charging level is "high", no intervention from base station side shall be done i.e., no message shall be sent to the core network that indicates a low charging level.
- Each time the charging level changes from "low" to "high" or from "high" to "low", the new status of the base station shall be reported to the core network for keeping the status consistent.
- If a User Equipment (UE) moves from one site to another adjacent site (a) by cell re-selection or (b) via handover, in addition to the service and user class, also the charging level of the target site (receiving base station) is relevant for the QCI/5QI to be used. The latter differentiates between the QoS settings to be applied for this service and user class in case of "high" charging level or the set of reduced quality parameters in case of "low" charging level of the battery pack of the base station.

In a preferred implementation of the present invention, two or multiple sets of QoS parameters related to each QCI/5QI shall be defined in the core network and RAN e.g., QCI190/5QI190 as an operator-specific deviation of QCI9/5QI9 for lower throughput.

The above explanations have been given on basis of amending the QCI in the core network. According to the present invention it is also conceivable to change the QCI/5QI related QoS parameter settings on RAN (radio access network) side.

As an alternative to the change of the QCI/5QI on core side, the related QoS parameters can also be changed on RAN side. The benefit is that no additional message exchange between the RAN and core network about the charging status is necessary.

Since the base station does not have knowledge about the service type but about the assigned QoS attributes and QCI/5QI settings, a modification of the QCI/5QI related settings shall be triggered by the base station in a further optional embodiment of this invention. This requires that specific QCIs/5QIs are assigned to conversational and streaming services on core side, e.g., QC1190 and QC1191. Both differ in the characteristics of the QoS attributes assigned to this QCI. In this example QCI190 represents the class for high quality, while QCI191 represents settings of a lower quality level (requiring less throughput within the established data connection between the first network member and the second network member).

During charging level "low" periods (in which the power saving features are to be activated and used more frequently), the base station shall perform a QoS reassignment from QCI190 to QCI191 thereby restricting throughput within the data connection. If the charging level changes to "high", the original QoS settings for QCI190 shall be re-assigned and no limitations with respect to throughput are present anymore.

According to a further modification of the present invention, in the network, e.g. in transport network or on RAN side, the user throughput can also be limited which may cause the application executed by network member to change the codec as a potential measure for applying a power saving feature. For example, resource assignment decisions in the base station, in particular by the RRM, take into consideration the amount of data that is presently available in the queue of data to be scheduled to a specific UE (= user equipment). To reduce the scheduling frequency for this UE, a lower buffer status of available data shall be reported, and/or incoming data shall be retarded to trigger a reduction of the number of resources assigned to the downlink connection for this UE. Consequently, the scheduler of the base station occupies less resource blocks for data transmission to this UE and more idle resource blocks are available. Thus, the throughput of data is limited and more complex power saving functions (e.g. carrier deactivation, power amplifier shutdown) of the base station can be activated. The opportunities for energy savings grow.

In a further embodiment of this invention, the scheduling weight shall be reduced to provoke lower user throughput and thus to force the conversational or streaming application of the user equipment transmitting/receiving data via the base station to use a codec that occupies less resources. This modification can be done in the base station, as the base station has knowledge about the quality of service of the data connection with the user equipment, in particular about the QCI/5QI and/or the scheduling weight related to each QCI/5QI. The values of the weighting factors can thus be changed in order to apply a power saving function in the base station.

Fig. 8 shows the flow chart of the general procedure of the inventive method for operating an energy efficient network: The query 900 "Is the charging level low?" represents all options for the differentiation of the available amount of energy. This includes the different options of classifying the charging level of the battery system shown in Fig. 6, as well as various site deployment scenarios with or without battery packs. In general, the power consumption policy of the network is consulted in order to determine whether power saving functions of the base station or any other network component should be executed. If no battery pack is installed with a power generation system, the amount of currently generated power can for example be used as differentiator for query 900.

If the result of query 900 is "yes", a QoS class identifier e.g., the QCI/5QI assigned to user equipments connected to the considered base station shall be modified in step 910 to use QoS values of lower quality. This modification can be done (a) directly in the core network by an exchange of information about the charging level between the base station and the core network via dedicated messages or (b) indirectly by the base station by keeping the quality of service class identifier assigned by the core network to a specific service and user but modifying the inherent QoS settings.

As a consequence of assigning QoS settings of lower quality, less resources will be allocated to the UE in step 920. These procedures are executed on network side.

If the radio channel conditions for the connection between the base station and the UE via the air interface are considered as unchanged within a certain range, the allocation of less resources leads to a lower user throughput. Several streaming applications executed on the user equipments adapt the codec on the achieved user throughput. Thus, triggering of the codec adaptation on the application side is executed in step 930. Also, the number of assigned resources i.e., the assigned bandwidth, can be considered as trigger for codec adaptation.

As a consequence of assigning less resources in step 920, the number of occupied resource blocks decreases and provides potential for deactivating the PA for the time interval of the resource block or even providing potential for a deactivation of the complete carrier. Both aspects are accompanied by prior art RRM technologies that reorganise the resource assignment to concentrate data scheduling in the time domain thus providing idle TTIs for deactivating the PA. Prior art technologies also support moving traffic from one carrier to another carrier to temporarily deactivate a low loaded capacity carrier. However, according to the present invention it is the network which may reduce the amount of data transferred via the base station in order to reach the prerequisites for enabling those power saving features. Compared to the prior art power saving functionality, the time span in which those power saving features can be applied are elongated as the prerequisites for utilising those power saving features can actively be met by help of the network (reducing the throughput of the data connection).

Step 910 also includes the path back to query 900 thus providing a continuous verification of the result of query 900. If the result of query 900 is negative i.e., sufficient energy is available (in alignment with the power consumption policy), the originally defined quality of service values, in particular the QCI/5QI values at the considered base station site are restored again in step 940 to their original values. This can be done (a) in the core network by sending a message about the change of the charging level from the base station to the core network or (b) in the base station by restoring the original QoS settings assigned to the data connection, in particular to the QCI/5QI.

Restoring of the QoS/5QI settings results in returning to the standard amount of assigned resources in step 950, e.g. the scheduling weight is no longer reduced. With a higher number of assigned resources, the throughput typically increases which in turn can trigger a codec change by the application in step 960 resulting in a higher service quality.

As a consequence of returning to the standard resource assignment in step 950, more resources are assigned to the UE and the number of occupied resources on the active carriers increases. Thus, less idle TTIs, slots and symbols are available and power saving options are reduced.

Step 940 includes the connection to query 900 for continuously checking the charging level and switching to step 910 if the conditions are fulfilled.

In a further optional modification of the invention, the capacity of the cell covered by a base station shall be limited by reducing the amount of accessible resource blocks in the time domain. Blanking a complete time slot shall be executed depending on the charging level of the battery system or the power consumption policy. In these time slots, no resource blocks shall be allocated.

In a further embodiment of this invention, the charging level of the battery and/or the amount of on-site produced energy/and or the power consumption policy of the network shall be used as trigger point for the activation and deactivation of fans, air-conditioning, and heating systems deployed in a network, in particular the network component like the base station. These components consume a high amount of energy and their activation and deactivation can be delayed or brought forward within a certain temperature range.

In a further embodiment of the presented invention, the user shall obtain the opportunity to define whether low energy consumption shall be applied for a specific service. Preferentially the user can decide it via the Graphical User Interface (GUI) of a mobile application executed by the user equipment, a so-called App. If the user decides on low energy mode, the resolution of the video will be set to a low value. Consequently, another codec is used which requires less resources for data transmission. Further criteria can be combined e.g., the availability of on-site generated energy for the base station the UE is served.

In a further embodiment of this invention, the energy mode selected via the App shall also define the network technologies that are accessible for data transmission. Low energy mode for example can restrict access to specific technologies that have lower power consumption. If the user decides to leave the low energy mode to obtain a higher quality/resolution for the service, a temporarily deactivated technology on RAN side can be reactivated.

Further, the same method for power saving by deactivating a technology can be applied on UE side. If the UE reaches a low battery level e.g., less than 10%, codec adaptation to a lower quality codec shall be executed in an automated manner, which reduces the power consumption of the mobile device and extends its battery lifetime. Background services on the UE side such as sending of e-mails, file transfers, short message services, WhatsApp messages, periodic software updates etc. are less delay critical and can be transmitted in periods in which more power is generated, and capacity carriers are reactivated to increase the capacity. Background services can also be transmitted during low traffic periods, in which only the coverage layer is active and sufficient resources are available on this layer. For this, in a further embodiment of this invention the maximum transmission delay shall be defined by the user via an App e.g., one minute or one hour. Thus, the traffic load can be further smoothened and a frequent reactivation of temporarily deactivated resources is not required.

The same procedures as explained above with respect to the video codecs shall be applied to audio codecs. Thus, adapting the codec may be dependent on the availability of a high amount of energy produced at the site or in general to the power consumption or the power consumption policy of the network. Audio codecs using a different audio bandwidth (wideband, super-wideband, full-band) typically have a different nominal bitrate and hence require a different number of resource blocks to be allocated.

The person skilled in the art is well aware that the energy-based adaptation of the video and audio codes is not restricted to the base station of mobile networks. The same principles shall be applied to routers and microwave transmitters in the transport network and to data transmission in the core network.

In the transport network the capacity is typically divided into several pools and some of the pools can be temporarily deactivated for energy saving purpose e.g., during night-time. The procedure of energy-based triggering of transmission capacities shall be applied in the transport network and within the core network to adapt the occupied resources on power consumption and the availability of a high amount of produced energy of the power generation system. With this mechanism the number of assigned resources can be controlled in the transport network and within the core network and thus a deactivation of one or several pools can be provoked by energy-saving decisions.

According to a preferred modification of the present invention, the power saving features shall be restricted to specific QoS class indicators e.g., QCIs/5Qis, within an existing data connection of the network to avoid an impact of delay on more delay-sensitive services, such as interactive services, tactile services, or gaming applications. Decreasing the quality of service for these applications would immediately be perceived as annoying by the user.

The advantages of the present invention are, for the sake of brevity, given below:
- The invention proposes to introduce a new component for energy efficiency that interacts between a power generation system and energy saving features characterised by reducing the throughput for a specific connection established by the network if the level of produced power at the base station site or the charging level of the battery pack is low or the power consumption policy requires to do so.
- The throughput shall be increased again if the amount of available energy or currently produced power increases, thus providing a mechanism for balancing performance versus energy consumption.
- The invention proposes a throughput reduction within the existing data connection in order to reduce the energy consumption of a network component e.g., the base station. Thus, if the current energy consumption exceeds a specific threshold, actions for reducing the throughput of the considered connection shall be triggered. As a consequence, the resource occupation will be reduced for specific applications.
- The present invention proposes various actions for reducing the throughput of a considered connection:
   ∘ Changing of the QoS class identifier, e.g. QCI/5QI in the core network based on the level of available energy/state of charge of a battery pack/power consumption policy.
   ∘ Changing of the QoS parameters related to a specific QoS class identifier, e.g. QCI/5QI in the base station based on the level of available energy/state of charge of a battery pack/power consumption policy.
   ∘ Changing of the scheduling weight in the base station, preferably based on the level of available energy/state of charge of a battery pack/power consumption policy.
   ∘ Direct reduction of the number of allocated resources of a connection in the base station, for example on RAN side based on the level of available energy/state of charge of a battery pack/power consumption policy.
- The execution of these actions leads to a reduction of allocated resources to increase the amount of idle resource blocks on the side of the base station, in particular on the air interface. The lower number of allocated resource blocks provides additional potential for energy savings by deactivation of the PA of the base station in periods in which no data are scheduled for the considered TTI, slot, or symbol, or for deactivating a complete carrier.
- The reduction of allocated resources leads to a lower user throughout, which can trigger a change of the codec for specific services by the application. It is therefore the network that indirectly provokes a change of the codec by the application executed in the user equipment being receiver/transmitter within a data connection of the network. This codec adaptation to a codec that is better suited for the reduced throughput of the data connection is done in a domain that is not directly accessible by the network.
- These actions shall preferentially be executed for those QoS class identifiers in the established data connection e.g., QCIs/5QIs, that are defined for conversational and streaming services i.e., for services that already support a codec adaptation by the application. As real-time services, the lower throughput results in a reduction of the total amount of transmitted data and hence in a lower resource occupation. In contrast, for file transfer services, associated with another QCI/5QI, the number of transmitted data remains unchanged and a throughout reduction leads to a longer occupation of the resources.
- This invention extends the options for energy efficiency in communication networks by controlling the balance between energy savings and service quality in terms of codec resolution.
- Introducing options for triggering lower resource allocations via the GUI of the mobile terminal and definition of a maximum delay budget for transferring data of services of low latency requirements e.g., for background services.
- The actions presented in this invention can also be used for load control in the communication network. In this case decisions about execution of these actions are based on the current traffic load and not on energy aspects.
- As already explained, the described procedure can also be triggered by the energy consumption policy of the mobile network operator instead of the current charging level of the battery system or the current output of the power generation system. The energy consumption policy of the mobile network operator may define at which price level and for which periods of the day and days of the week the state "energy saving" will be triggered and one or several of the described procedures shall be executed.

In summary, in prior art technologies, the application itself defines the video and audio codec that is used for the selected service. This can be a fixed codec that remains unchanged during the transmission, or it can be an automatic adaptation of the codec depending on the throughput or delay that is achieved during the transmission. The throughput- or bandwidth-dependent adaptation of the codec by the application can be utilised by the presented invention. In contrast to prior art technologies, it is now the energy saving policy of the communication network that limits the assigned resources such that a codec adaptation is indirectly triggered by the amount of available energy, preferentially by the on-site produced green energy.

### Abbreviations:

- 3GPP: 3rd Generation Partnership Project
- 4G: Fourth Generation
- 5G: Fifth Generation
- 5QI: 5G Quality of Service Identifier
- 6G: Sixth Generation
- eNB: evolved NodeB
- gNB: next generation NodeB
- GUI: Graphical User Interface
- KPI: Key Performance Indicator
- PA: Power Amplifier
- QCI: Quality of Service Class Identifier
- QoS: Quality of Service
- RAT: Radio Access Technology
- RAN: Radio Access Network
- RF: Radio Frequency
- RRM: Radio Resource Management
- TTI: Transmission Time Interval
- UE: User Equipment

### Literature

[1] Abhijit Mondal, Satadal Sengupta, Bachu Rikith Reddy, M.J.V. Koundinya, Chander Govindarajan, Pradipta De, Niloy Ganguly, and Sandip Chakraborty, "Candid with YouTube: Adaptive Streaming Behavior and Implications on Data Consumption", in proceedings of the 27th Workshop on Network and Operating Systems Support for Digital Audio and Video (NOSSDAV'17), June 2017, https://satadalsengupta.github.io/docs/papers/2017_nossdav youtubedash.pdf.
[2] Abdelhak Bentaleb, Bayan Taani, Ali C. Begen, Christian Timmerer, and Roger Zimmermann, "A Survey on Bitrate Adaptation Schemes for Streaming Media Over HTTP", IEEE COMMUNICATIONS SURVEYS & TUTORIALS, VOL. 21, NO. 1, FIRST QUARTER 2019, https://ieeexplore.ieee.org/document/8424813.

## Claims

1. An energy-efficient network comprising:
a first network member and a second network member between which a data transmission is established via at least one network component,
**characterized in that**
a power consumption controlling unit for adapting the throughput and/or latency of the data transmission by controlling the at least one network component, wherein
the power consumption controlling unit is configured to adapt the throughput and/or latency of the data transmission established between the first network member and the second network member on basis of a power consumption policy of the network.

2. The network of claim 1, wherein
the power consumption policy of the network comprises information about the current electricity price level together with a threshold value for the electricity price and/or the current time and date of the day together with a scheme containing periods of the day in which energy is to be saved,
the power consumption controlling unit being further configured to adapt the throughput and/or latency of the data transmission on basis of the current electricity price level with respect to the threshold value for the electricity price and/or the current time and date of the day with respect to said scheme containing periods of the day in which energy is to be saved.

3. The network of any one of the preceding claims, further comprising:
a power generation system for generating power to be supplied to the energy-efficient network, preferably to the at least one network component, wherein
the power consumption policy comprises information about the state of the power generation system, preferably a level of currently produced power of the power generation system together with a threshold value for the level of currently produced power, and
the power consumption controlling unit being further configured to adapt the throughput and/or latency of the data transmission on basis of the currently produced power with respect to the threshold value for the currently produced power.

4. The network of any one of the preceding claims, further comprising:
a power generation system for generating power to be supplied to the energy-efficient network, preferably to the at least one network component, and
a power accumulating device for storing energy generated by the power generation system, particularly a battery pack, wherein
the power consumption policy comprises information about the state of the energy accumulating device, preferably a current charging status together with a threshold value for the charging status, and
the power consumption controlling unit being further configured to adapt the throughput and/or latency of the data transmission on basis of the current charging status with respect to the threshold value for the charging status, wherein the network preferably further comprises
a predicting unit for predicting the power generation of the power generation system so that the power consumption control unit being further configured to adapt the throughput and/or latency of the data transmission on basis of the predicted power generation.

5. The network of any one of the preceding claims, wherein the power consumption controlling unit is configured to limit the throughput and/or control the latency of the data transmission between the first network member and the second network member in order to reduce the energy consumption of the network component.

6. The network of any one of the preceding claims, wherein the power consumption controlling unit is configured to adapt the throughput and/or latency by changing the service characteristics of the data transmission, preferably by changing the quality of service of the data transmission.

7. The network of any one of the preceding claims, wherein the network is a mobile telecommunication system network and the first network member and/or the second network member is a mobile user equipment or a data server in the network, and preferably wherein the network component is a base station.

8. The network according to the preceding claim 7, wherein the power consumption controlling unit is configured to adapt
a QoS quality indicator or identifier or class in a core network,
a QoS quality indicator or identifier or class of a specific transmission in a base station,
a scheduling weight in a base station,
a number of allocated resources on RAN side, and/or
the underlying network technology used for data transmission, e.g. 3G, 4G or 5G.

9. System of a network of any one of the preceding claims and a mobile user equipment adapted to be used in the network, preferably wherein the mobile user equipment is adapted to send a request for limitation of throughput and/or increasing latency in the data transmission to/from the mobile user equipment from/to the network.

10. Method for operating an energy-efficient network, preferably the network of any one of preceding claims 1 to 8, comprising the steps of:
establishing a data transmission between a first network member and a second network member via at least one network component,
adapting the throughput and/or latency of the data transmission by controlling the at least one network component, wherein
the throughput and/or latency of the data transmission established between the first network member and the second network member is adapted on basis of a power consumption policy of the network.

11. Method of preceding claim 10, wherein
the power consumption policy of the network comprises information about the current electricity price level together with a threshold value for the electricity price and/or the current time and date of the day together with a scheme containing periods of the day in which energy is to be saved, and
the throughput and/or latency of the data transmission is adapted on basis of the current electricity price level with respect to the threshold value for the electricity price and/or the current time and date of the day with respect to said scheme containing periods of the day in which energy is to be saved.

12. Method of any one of the preceding claims 10 or 11, wherein
power is supplied to the energy-efficient network by a power generation system, preferably to the at least one network component, wherein
the power consumption policy comprises information about the state of the power generation system, preferably a level of currently produced power of the power generation system together with a threshold value for the level of currently produced power, and
the throughput and/or latency of the data transmission is adapted on basis of the currently produced power with respect to the threshold value for the currently produced power.

13. Method of any one of the preceding claims 10 to 12, wherein
the throughput of the data transmission between the first network member and the second network member is limited and/or the latency is increased in order to reduce the energy consumption of the network component, preferably by changing the service characteristics of the data transmission, e.g. by changing the quality of service of the data transmission.

14. Method of any one of the preceding claims 10 to 13, wherein the network is a mobile telecommunication system network and the first network member and/or the second network member is a mobile user equipment or a data server in the network, and preferably wherein the power consumption of the network component is adapted by changing:
a QoS quality indicator or identifier or class in a core network,
a QoS quality indicator or identifier or class of a specific transmission in a base station,
a scheduling weight in a base station,
a number of allocated resources on RAN side, and/or
the underlying network technology used for data transmission, e.g. 3G, 4G or 5G.

15. Method for operating a system of a network of any one of the preceding claims 1-8 and a mobile user equipment connected to the network, preferably wherein adapting the throughput and/or latency of a data transmission between the mobile user equipment and the network causes the mobile user equipment to change its codec used for compression/coding and decompression/decoding of data transferred within said data transmission.
